# EUROPEAN PATENT SPECIFICATION

(11) **EP 2 626 235 B1**
(45) Date of publication and mention of the grant of the patent: **21.01.2015**
(21) Application number: 12154773.1
(22) Date of filing: 09.02.2012
(51) Int. Cl.: B60N 2/28, B60N 2/30

(54) **Vehicle seat arrangement**
Fahrzeugsitzanordnung
Agencement de siège de véhicule

(43) Date of publication of application: 14.08.2013
(73) Proprietor: Volvo Car Corporation, 405 31 Göteborg (SE)
(72) Inventor: Mendis, Kolita, Redmond, WA Washington 98052 (US); Wessman, Björn, Thousand Oaks, CA California 91362 (US); Downs, John, Simi Valley, CA California 93065 (US)

(56) References cited:
- EP-A1- 0 348 374
- EP-A2- 0 803 398
- DE-C1- 4 443 614
- DE-U1-202008 012 921
- JP-A- 2001 130 298

## Description

### TECHNICAL FIELD

The present disclosure relates to vehicle seat arrangement comprising a passenger seat and a child seat module.

### BACKGROUND

Child seat modules as such for use in a vehicle are known.

It is known that in many situations a child, especially a small child, travels more safely in a child seat facing rearwards than forwards, since a rearward-facing child seat provides more support for the child's head in the event of a sudden deceleration. Such rearward-facing child seats may be placed on the front passenger seat and/or the rear seat. The term "small child" is used for children being old enough to sit but yet not too large and heavy for sitting in a rearward-facing child seat. Typically a "small child" is between 6 months and 4 year old, or up to 18 kg.

A conventional child seat may comprise a shell of a rigid material such as plastic, which shell is intended to protect the child in case of a collision. The shell is commonly at least partly covered by a cover of a softer material to provide comfort for the child. However, due to the weight of the shell, such a child seat has a considerable weight and may therefore be difficult to handle, especially when installing the child seat in a vehicle or removing it from the vehicle. The installation may be rather complicated, such that there is a risk that the child seat is erroneously installed and thus not offering full protection. Further, when the child seat is not in use, it may be desirable to store it somewhere else in the vehicle and it will then, due to its construction, occupy a rather large space for example in the luggage boot. If it instead is stored in some other location outside of the vehicle, there is a risk that the child seat is not at hand when needed.

Document WO 03/068555 A1 discloses a multifunctional vehicle seat comprising an additional unfoldable seat, primarily intended for children, recessed in the backrest. The child seat may be unfolded to a forward facing cushion seat or, as an alternative, be unfolded to a rearward-facing cradle. However, as described above, it is safer for small children to travel in a rearward-facing position. The cradle is indeed rearward-facing but is only suitable for infants due to its size. In addition, due to the inclination of the back rest, the infant will have a lying position in the cradle, which differs from the sitting position desired for a small child.

### SUMMARY

The object of the present disclosure is to overcome or ameliorate at least one of the disadvantages of the prior art, or to provide a useful alternative.

It is desirable to provide a rearward-facing child seat, which is easy to handle. It also desirable that the risk of erroneous installation is reduced as compared to for a conventional rearward-facing child seat.

It is further desirable that the child seat is integratable into a passenger seat of the vehicle, such that it is at hand when needed.

The object above may be achieved by the subject-matter of claim 1.

Thus, in a first aspect of the present invention there is provided a vehicle seat arrangement comprising
- a passenger seat having a back rest and a squab, and
- a child seat module, being attachable to the back rest of the passenger seat.

The child seat module has a folded state, wherein the child seat module is integratable into the back rest, and an unfolded state, wherein the child seat module provides a rearward facing child seat.

The child seat according to the disclosure provides a convenient and safe rear-ward facing child seat. Since it is integratable in the back rest, which integration may be done at a vehicle manufacturing plant, a dealer or a workshop, the risk of an erroneous installation of the child seat is reduced as compared to for a conventional rearward-facing child seat. The handling comprises folding or unfolding; which is easier than installing a conventional child seat. Further, the child seat does not need to be lifted or carried, so it may be handled also by persons not being strong enough to handle a conventional rearward-facing child seat.

Document DE 20 2008 012 921 U1, which is considered the closest prior art, relates to a passenger seat for a traffic means. The passenger seat comprises a foldable child seat module. The child seat module has a folded state, wherein it is integratable into the back rest of the passenger seat, and an unfolded state, wherein it provides a rearward facing child seat.

Moreover, since the child seat is integratable into the back rest, it is always at hand when needed. However, when not in use, the child seat is folded and recessed in the back rest, which then may be used as a normal passenger seat. A person seated in the passenger seat with the integrated child seat module will sit in a similar way as in a conventional passenger seat without an integrated child seat module.

The child seat module in its folded state may form at least a portion of the passenger receiving surface of the back rest. It may together with a head rest of the passenger seat form substantially the whole passenger receiving surface.

The child seat module may be completely integrated into the back rest of the passenger seat when in its folded state. Thereby the comfort of the passenger seat is improved when used by e.g. an adult person.

The passenger seat comprising the child seat module may be a centre back seat. This is advantageous, since it is safe for the child to ride in the centre of the vehicle.

The child seat module may comprise
- a squab and a seat back for receiving a child to be seated in the child seat module, and
- a support structure attachable to the back rest of the passenger seat.

The squab and the seat back of the child seat module are pivotally connected to the support structure, thereby allowing movement of the child seat module between the folded state and the unfolded state.

The support structure may comprise a first portion, a second portion, and a third portion, the first portion at a first end being pivotally attachable to the back rest of the passenger seat in the vehicle,
a second opposite end of the first portion being pivotally connected to a first end of the second portion,
a second opposite end of the second portion being pivotally connected to a first end of the third portion,
a second opposite end of the third portion being pivotally connected to the seat back,
the seat back further being connected to the first portion at least in the unfolded state of the child seat module.

The child seat module may further comprise at least one attachment structure, the first portion at the first end being pivotally attachable to the back rest of the passenger seat by means of the at least one attachment structure, preferably by means of a pair of attachment structures, one at each lateral side of the first portion of the support structure.
The attachment structure may be attached to the lower fixing/rotation points of the back rest of the passenger seat, thereby making it easy to integrate the child seat module into the back rest. As an alternative, ISO-fix points may be used.

The seat back of the child seat module may be slidably connected to the first portion of the support structure, such that the seat back can slide in relation to the first portion when transferring the child seat module from its folded to its unfolded state, e.g. by the seat back comprising a protrusion adapted to slide in a slot of the first portion. The sliding movement allows the seat back to reach an inclination which is suitable for the child. The protrusion may in that case be slid to the end of the slot. Alternatively, it may be slid to an arbitrary position in the slot and locked in there by any suitable locking means.

As an alternative the seat back of the child seat module may be rotated around the connection to the second portion until it reaches the desired inclination and then be attached to the first portion, e.g. by placing a protrusion located at the lower end of the seat back in a corresponding slot in the first portion of the support structure. A plurality of slots may be provided, such that a plurality of different inclinations may be selected.

The second portion of the support structure may comprise a connection portion for releasable attachment to a body of the vehicle, preferably to a centre console. This enhances the stability of the child seat module, since it will be attached at both ends.

The squab of the child seat module may form part of the passenger receiving surface of the back rest of the passenger seat.

The squab may be pivotally connected to the first portion of the support structure. It may for example be pivotable from a first position when the child seat module is in its folded position to a second position suitable for receiving a child, the space wherein the squab was in its first position thereby forming an opening suitable for receiving the feet of a child seated in the child seat module.

The seat back and/or the squab of the child seat module may further comprise at least one side structure at a lateral side of the seat back and/or the squab, the side structure being pivotally connected to the seat back and/or the squab, such that the side structure can rotate between a folded position and a deployed position. The side structures may be made as a fold-out hard parts, or the side structures may be inflatable bladders. The side structures will help to keep the child in position and will improve the comfort of the child.

The child seat module may in its folded state be rotatable to a lay-flat position, in which the child seat module lies flat against the squab of the passenger seat. In this position the child seat module may be used as an armrest for the other passenger seats or as a table.

The passenger seat may further comprise a head rest, the head rest being shaped such that a cavity for receiving a portion of the child seat module in its folded state is provided below the head rest. The head rest may be raisable in relation to the back rest of the passenger seat in order to allow the displacement of the child seat module between its folded state and its unfolded state. As an example, the head rest may be mounted on at least one bar fitting into at least one bore in the back rest. When not in use, the head rest preferably is in a lower position, in which it rests on the back rest. There is then enough room below the head rest to hold the child seat module in its folded state. When the child seat module is to be unfolded, the head rest is raised upwards allowing the child seat module to freely pass below the head rest. The head rest may thereafter suitably be moved back to the lower position. If a passenger is going to use the passenger seat, the child seat module is stored in its folded state in the back rest. The head rest is then raised to a height appropriate for the person who is using the passenger seat.

In a second aspect of the present invention there is provided a vehicle comprising a vehicle seat arrangement as described above. The child seat module may be connected to a vehicle safety system, e.g. comprising a belt-minder, and/or occupancy detection.

The vehicle seat arrangement as described above, comprising the passenger seat and the child seat module, may be manufactured, sold and/or used as a separate module. As an alternative, the child seat module itself may be manufactured, sold and/or used as a separate unit. In addition, the passenger seat adapted for receiving a child seat module may be manufactured, sold and/or used as a separate unit. The child seat module and/or the passenger seat may also be manufactured, sold and/or used as a part of a vehicle.

### BRIEF DESCRIPTION OF THE DRAWINGS

The present invention will hereinafter be further explained by means of non-limiting examples with reference to the appended drawings wherein:
- Fig. 1: is a schematic view of a child seat module according to the present invention in an unfolded state;
- Fig. 2: is a schematic view of the child seat module according to Fig. 1 in a folded state; and
- Fig. 3a-f: illustrate in a number steps the transfer of the child seat module according to Fig. 1 from the folded state to the unfolded state.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

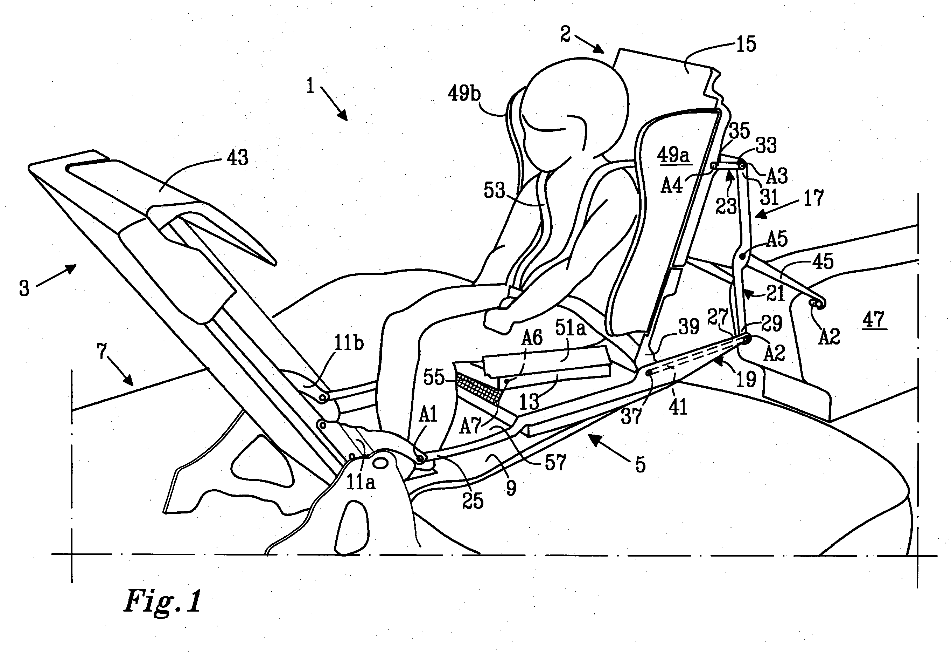

Figure 1 schematically illustrates a vehicle seat arrangement 1 according to the present invention comprising a child seat module 2 in an unfolded state. The child seat module 2 has been unfolded from a back rest 3 of a passenger seat 5 of the vehicle seat arrangement 1 in a vehicle 7. The child seat module 2 rests on a squab 9 of the passenger seat 5. In this exemplary embodiment, the passenger seat 5 forms the centre rear seat of the vehicle 7. However, a child seat module 2 according to the invention may be integrated into any passenger seat of the vehicle 7. Just as the case is for a conventional rearward-facing child seat, a potential airbag situated in front of the child seat module 2 should suitably be removed or inactivated in order to prevent that the airbag deploys in case of an accident, thereby pushing the child seat module away.

The child seat module 2 is attached to the back rest 3, e.g. by means of a pair of attachment structures 11 a, 11 b, one located at each lateral side of the child seat module 2. The attachment structures 11a, 11b are releasably connected to the back rest 3 but maintained in a fixed position when connected, e.g. by a screw connection or a bolt and nut connection. If disconnecting this connection, the child seat module 2 may be detached from the vehicle 7.

The child seat module 2 comprises a squab 13 and a seat back 15 for receiving a child to be seated in the child seat module 2. The child seat module 2 further comprises a support structure 17 attachable to the back rest 3 by means of the attachment structures 11 a, 11 b. The support structure 17 comprises a first portion 19, a second portion 21, and a third portion 23. The first portion 19 is at a first end 25 pivotally connected at a rotational axis A1 to the attachment structures 11 a, 11 b. Thereby the first portion 19, and thus the whole child seat module 2, may pivot in relation to the back rest 3 of the seat 5 in the vehicle 7. A second opposite end 27 of the first portion 19 is pivotally connected at a rotational axis A2 to a first end 29 of the second portion 21. A second opposite end 31 of the second portion 21 is pivotally connected at a rotational axis A3 to a first end 33 of the third portion 23. A second opposite end 35 of the third portion 23 is pivotally connected at a rotational axis A4 to the seat back 15 of the child seat module 2.

The term rotational axis is herein to be understood as a geometrical element, and not necessarily a physical shaft. It may e.g. be a pivot screw, a rivet, a hinge or a shaft, around which a rotation may occur.

Further, the seat back 15 is slidably connectable to the first portion 19, such that the seat back 15 can slide between a first position used in the folded state of the child seat module 2 and a second position used in the unfolded state when receiving a child. The slidable connection is in the illustrated example achieved by a protrusion 37 located at each lateral side adjacent to the lower end 39 of the seat back 15, which is adapted to move in a corresponding slot 41 in the first portion 19. When the seat back 15 is in the first position, its lower end 39 is located adjacent to the pivot axis A2 between the first portion 19 and the second portion 21.

The first portion 19 of the support structure 17 is dimensioned in order to substantially extend from the pivotable connection to the attachment structures 11 a, 11 b at the rotational axis A1 to a head rest 43 of the back rest 3 of the passenger seat 5. The first portion 19 thus is about as long as the back rest 3. Further, the first portion 19 is long enough to be able to accommodate the seat back 15 of the child seat module 2 when in a folded state.

The second portion 21 of the support structure 17 supports the seat back 15 in the unfolded state such that it can be maintained in an inclined position suitable for receiving a child. The second portion 21 comprises a connection portion 45, which is hingedly connected along rotational axis A5 to the rest of the second portion 21. The connection portion 45 is adapted to be connected to a centre console 47 of the vehicle 7, thereby anchoring the child seat module 2 to the vehicle body.

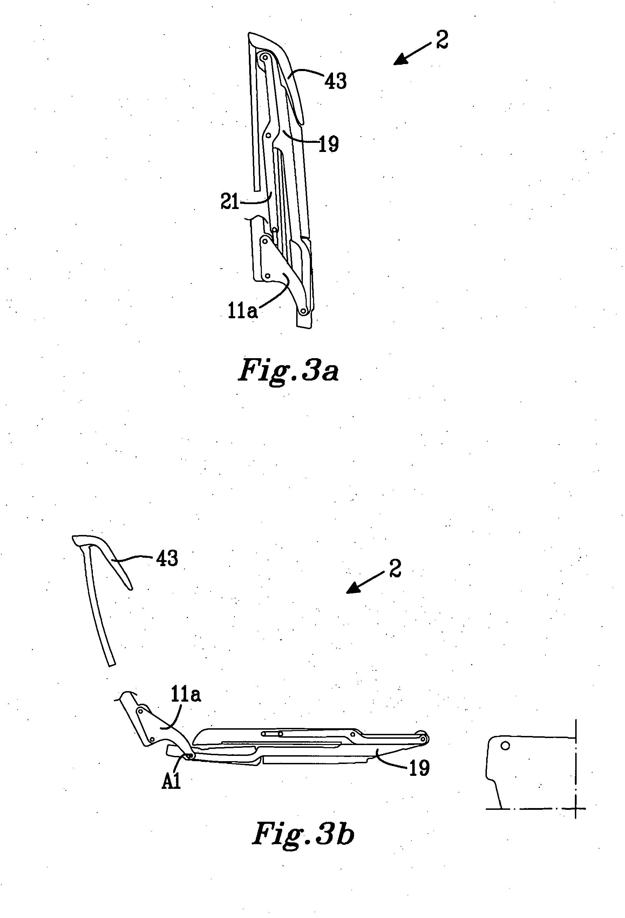

The third portion 23 of the support structure 17 is rather short. It is used to allow the seat back 15 to slide in the first portion 19, which will be further explained below in conjunction with Figures 3a-f. The combined length of the second portion 21 and the third portion 23 substantially corresponds to the length of the seat back 15 between its attachment to the third portion 23 at the rotational axis A4 and its lower end 39.

The seat back 15 comprises side structures 49a, 49b at its lateral sides. The side structures 49a, 49b are rotatable between a folded position used in the folded state of the child seat module 2 and a deployed position used in the unfolded state of the child seat module 2 when receiving a child. The side structures 49a, 49b will help to keep the child in position and will improve the comfort of the child. The squab 13 also comprises side structures 51 a, 51 b which are rotatable to a deployed position for improvement of comfort and safety. The side structures 49a, 49b, 51 a, 51 b may be made as a fold-out hard parts as seen in Figure 1, or the side structures may be inflatable bladders.The seat back 15 further comprises a child seat safety belt 53, e.g. a five-point harness. Such safety belts are well known to the skilled person and will not be discussed in any further detail.

The squab 13 is rotatably connected to the first portion 19 by means of an intermediate section 55. The intermediate section 55 is pivotally connected to the squab 13 at a rotational axis A6 and to the first portion 19 at a rotational axis A7. The double pivoting of the intermediate section 55 allows the squab 13 to move from a first position when the child seat module is in its folded position to a second position suitable for receiving a child. The space in the first portion 19 used for housing the squab 13 in its first position, forms an opening 57 suitable for receiving the feet of a child seated in the child seat module 2 in its unfolded state.

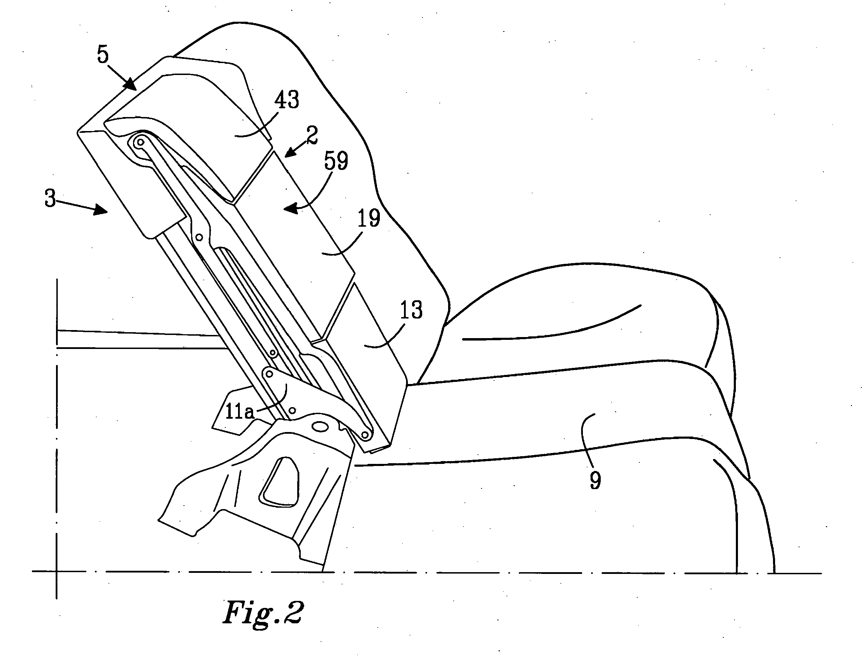

Figure 2 illustrates the child seat module 2 in its folded state. As may be gleaned from Figure 2 the child seat module 2 is completely integrated into the back rest 3 of the passenger seat 5, thereby forming a passenger receiving surface 59 of the back rest 3. This surface in principle lies flush with the corresponding surface of the other passenger seats. A person seated in the passenger seat 5 with an integrated child seat module 2 will sit in a similar way as in a normal passenger seat 5 without an integrated child seat module 2. The passenger receiving surface 59 comprises the surfaces of the squab 13 of the child seat module 2 and the first portion 19 of the support structure 17 and the head rest 43 of the back rest 3 of the passenger seat 5. Therefore, the side of the first portion 19 forming a part of the passenger receiving surface 59 preferably has a smooth surface, e.g. being bolstered and having a surface of the same kind as that of the other passenger seats of the vehicle 5.

The head rest 43 is mounted such that it is possible to raise it above the level of the back rest 3. As an example, the head rest 43 may be mounted on at least one bar fitting into at least one bore in the back rest 3. When not in use, the head rest 43 preferably is in a lower position, in which it rests on the back rest 3. There is enough room below the head rest 43 to hold the child seat module 2 in its folded state. When the child seat module 2 is to be unfolded, the head rest 43 is raised upwards allowing the child seat module 2 to freely pass below the head rest 43. The head rest 43 may thereafter suitably be moved back to the lower position.

If a passenger is going to use the passenger seat 5, the child seat module 2 is stored in its folded state in the back rest 3. The head rest 43 is raised to a height appropriate for the person who is using the passenger seat 5.

Figures 3a-f illustrates how the child seat module 2 is moved from the folded state to the unfolded state. In order to clarify the process, only the child seat module 2 and the head rest 43 are illustrated and not the whole passenger seat.

Figure 3a corresponds to Figure 2. The child seat module 2 is in its folded state being stored in the back rest of the passenger seat (not illustrated).

In Figure 3b the child seat module 2 has been rotated to a lay-flat position by rotating the first portion 19 around the rotational axis A1 located in the attachment structures 11 a, 11 b. In the lay-flat position the child seat module 2 lies flat against the squab of the passenger seat (not illustrated). In this position the child seat module 2 may be used as an armrest for the other passenger seats or as a table.

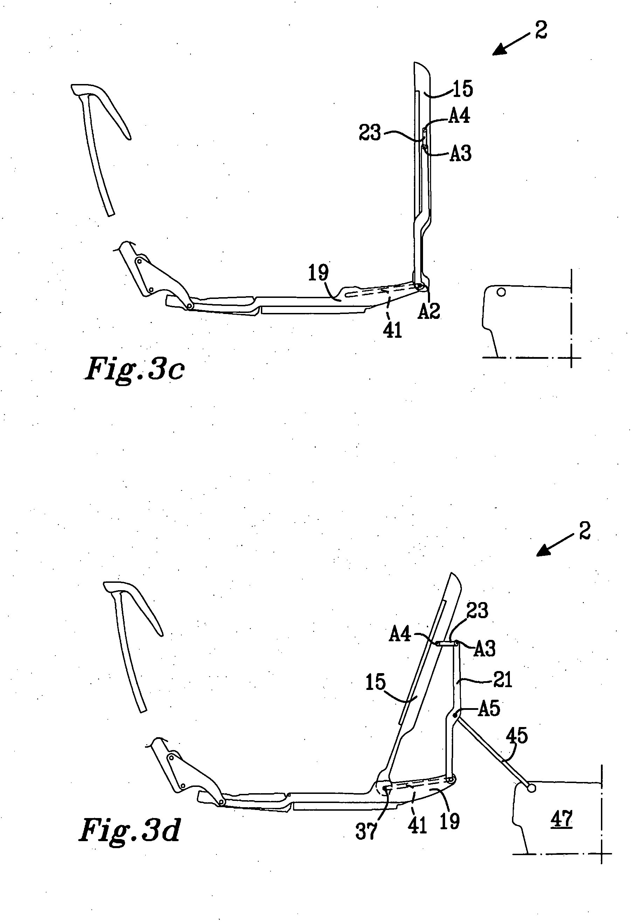

Thereafter the second portion 21 is rotated in relation to the first portion 19 around the rotational axis A2 to a substantially up-right position. The seat back 15 is rotated together with the second portion 21. See Figure 3c.

In the next step, the seat back 15 is slid in the first portion 19 in the direction towards the seat back 3. The third portion 23 then rotates around rotational axes A3 and A4 to a substantially horizontal position. The second portion 21 is connected to the centre console 47 by means of the connecting portion 45, which is rotated around the rotational axis A5, thereby anchoring the child seat module 2 to the vehicle body. See Figure 3d.

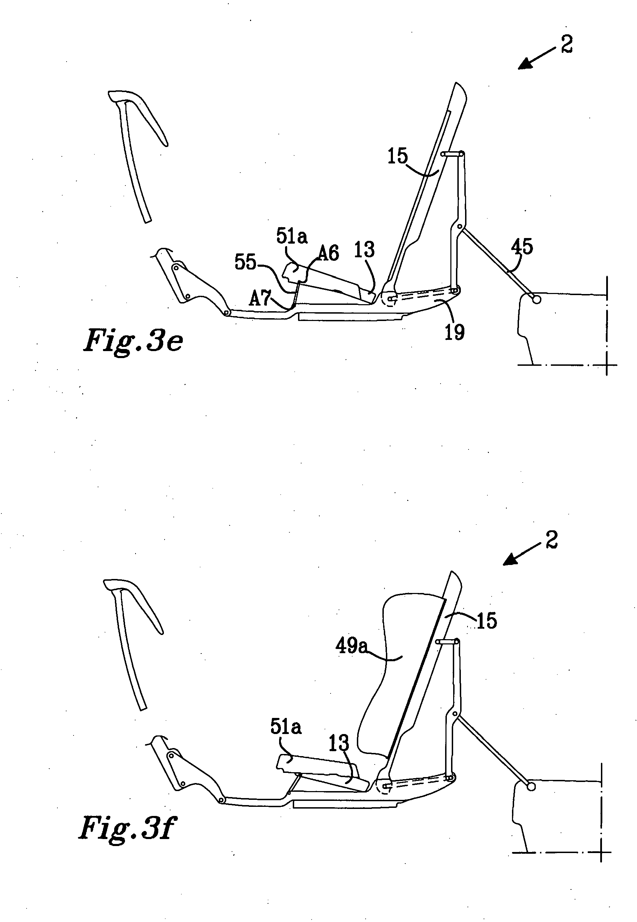

Then the squab 13 of the child seat module 2 is moved into position suitable for receiving a child by the double rotation of the intermediate section 55 around the rotational axes A6 and A7. See Figure 3e.

Finally, the side structures 49a, 49b of the seat back 15 and the side structures 51 a, 51 b of the squab 13 are rotated to their deployed positions. See Figure 3f.

The child seat module 2 has then reached its unfolded state, being ready to receive a child.

When folding the child seat module 2, the same steps are followed, but in reverse order.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A vehicle seat arrangement (1) comprising
- a passenger seat (5) having a back rest (3) and a squab (9), and
- a child seat module (2), being attachable to said back rest (3) of said passenger seat (5),
said child seat module (2) having a folded state, wherein said child seat module (2) is integratable into said back rest (3), and an unfolded state, wherein said child seat module (2) provides a rearward facing child seat,
said child seat module (2) comprising
- a squab (13) and a seat back (15) for receiving a child to be seated in the child seat module (2), and
- a support structure (17) attachable to said back rest (3) of said passenger seat (5),
said squab (13) and said seat back (15) of said child seat module (2) being pivotally connected to said support structure (17), thereby allowing movement of said child seat module (2) between said folded state and said unfolded state, **characterized in that**
said support structure (17) comprises a first portion (19), a second portion (21), and a third portion (23),
said first portion (19) at a first end (25) being pivotally attachable to said back rest (3) of said passenger seat (5) in said vehicle (7),
a second opposite end (27) of said first portion (19) being pivotally connected to a first end (29) of said second portion (21),
a second opposite end (31) of said second portion (21) being pivotally connected to a first end of (33) said third portion (23),
a second opposite end (35) of said third portion (23) being pivotally connected to said seat back (15),
said seat back (15) further being connected to said first portion (19) at least in said unfolded state of said child seat module (2).

2. The vehicle seat arrangement (1) according to claim 1, wherein said child seat module (2) in its folded state forms at least a portion of the passenger receiving surface (59) of said back rest (3).

3. The vehicle seat arrangement (1) according to any one of claims 1-2, wherein said child seat module (2) is completely integrated into said back rest (3) of said passenger seat (5) in said folded state.

4. The vehicle seat arrangement (1) according to any one of claims 1-3, said passenger seat (5) being a centre back seat.

5. The vehicle seat arrangement (1) according to any one of the preceding claims, wherein said child seat module (2) further comprises at least one attachment structure (11 a, 11 b), said first portion (19) at said first end (25) being pivotally attachable to said back rest (3) of said passenger seat (5) by means of said at least one attachment structure (11 a, 11 b), preferably by means of a pair of attachment structures (11 a, 11b), one at each lateral side of said first portion (19) of said support structure (17).

6. The vehicle seat arrangement (1) according to any one of the preceding claims, wherein said seat back (15) of said child seat module (2) is slidably connected to said first portion (19) of said support structure (17), such that said seat back (15) can slide in relation to said first portion (19) when transferring said child seat module (2) from its folded to its unfolded state, e.g. by said seat back (15) comprising a protrusion (37) adapted to slide in a slot (41) of said first portion (19).

7. The vehicle seat arrangement (1) according to any one of the preceding claims, wherein said second portion (21) of said support structure (17) comprises a connection portion (45) for releasable attachment to a body of said vehicle (7), preferably to a centre console (47).

8. The vehicle seat arrangement (1) according to any one of the preceding claims, wherein said squab (13) of said child seat module (2) forms part of the passenger receiving surface (59) of said back rest (3) of said passenger seat (5).

9. The vehicle seat arrangement (1) according to any one of the preceding claims, wherein said squab (13) is pivotally connected to said first portion (19) of said support structure (17).

10. The vehicle seat arrangement (1) according to claim 9, wherein said squab (13) is pivotable from a first position when said child seat module (2) is in its folded position to a second position suitable for receiving a child, the space wherein the squab (13) was in its first position thereby forming an opening (57) suitable for receiving the feet of a child seated in said child seat module (2).

11. The vehicle seat arrangement (1) according to any one of the preceding claims, wherein said seat back (15) and/or said squab (13) of said child seat module (2) further comprises at least one side structure (49a, 49b, 51 a, 51 b) at a lateral side of said seat back (15) and/or said squab (13), said side structure (49a, 49b, 51a, 51b) being pivotally connected to said seat back (15) and/or said squab (13), such that said side structure (49a, 49b, 51 a, 51 b) can rotate between a folded position and a deployed position.

12. The vehicle seat arrangement (1) according to any one of the preceding claims, said passenger seat (5) further comprising a head rest (43), said head rest (43) being shaped such that a cavity for receiving a portion of said child seat module (2) in its folded state is provided below said head rest (43).

13. The vehicle seat arrangement (1) according to claim 12, wherein said head rest (43) is raisable in relation to said back rest (3) of said passenger seat (5) in order to allow the displacement of said child seat module (2) between its folded state and its unfolded state.

## Patentansprüche

1. Fahrzeugsitzanordnung (1), die Folgendes umfasst:
- einen Passagiersitz (5) mit einer Rückenlehne (3) und einem Polsterkissen (9), und
- ein Kindersitzmodul (2), das sich an der Rückenlehne (3) des Passagiersitzes (5) befestigen lässt,
wobei das Kindersitzmodul (2) einen zusammengeklappten Zustand, in dem sich das Kindersitzmodul (2) in die Rückenlehne (3) integrieren lässt, sowie einen ausgeklappten Zustand hat, in dem das Kindersitzmodul (2) einen nach hinten gewandten Kindersitz bereitstellt,
wobei das Kindersitzmodul (2) Folgendes umfasst:
- ein Polsterkissen (13) und eine Sitzlehne (15), um ein Kind aufzunehmen, das im Kindersitzmodul (2) Platz nehmen soll, und
- eine Stützkonstruktion (17), die sich an der
Rückenlehne (3) des Passagiersitzes (5) befestigen lässt,
wobei das Polsterkissen (13) und die Sitzlehne (15) des Kindersitzmoduls (2) schwenkbar mit der Stützkonstruktion (17) verbunden sind, um so eine Bewegung des Kindersitzmoduls (2) zwischen dem zusammengeklappten Zustand und dem ausgeklappten Zustand zuzulassen,
**dadurch gekennzeichnet, dass**
die Stützkonstruktion (17) einen ersten Abschnitt (19), einen zweiten Abschnitt (21) und einen dritten Abschnitt (23) umfasst,
wobei sich der erste Abschnitt (19) an einem ersten Ende (25) schwenkbar an der Rückenlehne (3) des Passagiersitzes (5) im Fahrzeug (7) befestigen lässt,
wobei ein zweites gegenüberliegendes Ende (27) des ersten Abschnitts (19) schwenkbar mit einem ersten Ende (29) des zweiten Abschnitts (21) verbunden ist,
wobei ein zweites gegenüberliegendes Ende (31) des zweiten Abschnitts (21) schwenkbar mit einem ersten Ende (33) des dritten Abschnitts (23) verbunden ist,
wobei ein zweites gegenüberliegendes Ende (35) des dritten Abschnitts (23) schwenkbar mit der Sitzlehne (15) verbunden ist,
wobei die Sitzlehne (15) weiterhin mindestens im ausgeklappten Zustand des Kindersitzmoduls (2) mit dem ersten Abschnitt (19) verbunden ist.

2. Fahrzeugsitzanordnung (1) nach Anspruch 1, bei der das Kindersitzmodul (2) in seinem zusammengeklappten Zustand mindestens einen Abschnitt der passagieraufnehmenden Oberfläche (59) der Rückenlehne (3) bildet.

3. Fahrzeugsitzanordnung (1) nach einem der Ansprüche 1 bis 2, bei der das Kindersitzmodul (2) vollständig in die Rückenlehne (3) des Passagiersitzes (5) im zusammengeklappten Zustand integriert ist.

4. Fahrzeugsitzanordnung (1) nach einem der Ansprüche 1 bis 3, bei der der Passagiersitz (5) ein mittlerer Rücksitz ist.

5. Fahrzeugsitzanordnung (1) nach einem der vorstehend aufgeführten Ansprüche, bei der das Kindersitzmodul (2) weiterhin mindestens eine Befestigungskonstruktion (11a, 11b) umfasst, wobei sich der erste Abschnitt (19) am ersten Ende (25) schwenkbar an der Rückenlehne (3) des Passagiersitzes (5) mittels der mindestens einen Befestigungskonstruktion (11a, 11b), vorzugsweise durch ein Paar Befestigungskonstruktionen (11a, 11b), und zwar jeweils eine an jeder lateralen Seite des ersten Abschnitts (19) der Stützkonstruktion (17), befestigen lässt.

6. Fahrzeugsitzanordnung (1) nach einem der vorstehend aufgeführten Ansprüche, bei der die Sitzlehne (15) des Kindersitzmoduls (2) gleitbar mit dem ersten Abschnitt (19) der Stützkonstruktion (17) so verbunden ist, dass die Sitzlehne (15) beim Übergang des Kindersitzmoduls (2) aus seinem zusammengeklappten Zustand in seinen ausgeklappten Zustand im Verhältnis zum ersten Abschnitt (19) gleiten kann, beispielsweise dadurch, dass die Sitzlehne (15) einen Vorsprung (37) aufweist, der so ausgebildet ist, dass er in einem Schlitz (41) des ersten Abschnitts (19) gleiten kann.

7. Fahrzeugsitzanordnung (1) nach einem der vorstehend aufgeführten Ansprüche, bei der der zweite Abschnitt (21) der Stützkonstruktion (17) einen Verbindungsabschnitt (45) umfasst, um eine lösbare Befestigung an einem Körper des Fahrzeugs (7), vorzugsweise an einer Mittelkonsole (47), zu ermöglichen.

8. Fahrzeugsitzanordnung (1) nach einem der vorstehend aufgeführten Ansprüche, bei der das Polsterkissen (13) des Kindersitzmoduls (2) Teil der passagieraufnehmenden Oberfläche (59) der Rückenlehne (3) des Passagiersitzes (5) bildet.

9. Fahrzeugsitzanordnung (1) nach einem der vorstehend aufgeführten Ansprüche, bei der das Polsterkissen (13) schwenkbar mit dem ersten Abschnitt (19) der Stützkonstruktion (17) verbunden ist.

10. Fahrzeugsitzanordnung (1) nach Anspruch 9, bei der das Polsterkissen (13) aus einer ersten Position, in der das Kindersitzmodul (2) in seiner zusammengeklappten Position ist, zu einer zweiten Position, die sich für die Aufnahme eines Kindes eignet, geschwenkt werden kann, wobei der Raum, in dem sich das Polsterkissen (13) in seiner ersten Position befand, eine Öffnung (57) bildet, die geeignet ist, die Füße eines im Kindersitzmodul (2) sitzenden Kindes aufzunehmen.

11. Fahrzeugsitzanordnung (1) nach einem der vorstehend aufgeführten Ansprüche, bei der die Sitzlehne (15) und/oder das Polsterkissen (13) des Kindersitzmoduls (2) weiterhin mindestens eine Seitenkonstruktion (49a, 49b, 51a, 51b) an einer lateralen Seite der Sitzlehne (15) und/oder am Polsterkissen (13) umfasst, wobei die Seitenkonstruktion (49a, 49b, 51a, 51b) schwenkbar mit der Sitzlehne (15) und/oder dem Polsterkissen (13) so verbunden ist, dass sich die Seitenkonstruktion (49a, 49b, 51a, 51b) zwischen einer zusammengeklappten Position und einer Benutzungsposition drehen kann.

12. Fahrzeugsitzanordnung (1) nach einem der vorstehend aufgeführten Ansprüche, bei der der Passagiersitz (5) weiterhin eine Kopfstütze (43) umfasst, wobei die Kopfstütze (43) so geformt ist, dass ein Hohlraum zur Aufnahme eines Abschnitts des Kindersitzmoduls (2) in seinem zusammengeklappten Zustand unterhalb der Kopfstütze (43) zur Verfügung steht.

13. Fahrzeugsitzanordnung (1) nach Anspruch 12, bei der die Kopfstütze (43) im Verhältnis zur Rückenlehne (3) des Passagiersitzes (5) höhenverstellbar ist, um das Verschieben des Kindersitzmoduls (2) zwischen seinem zusammengeklappten Zustand und seinem ausgeklappten Zustand zuzulassen.

## Revendications

1. Agencement de siège de véhicule (1) comprenant
- un siège de passager (5) ayant un dossier (3) et une assise (9), et
- un module de siège d'enfant (2), pouvant être fixé audit dossier (3) dudit siège de passager (5),
ledit module de siège d'enfant (2) ayant un état plié, dans lequel ledit module de siège d'enfant (2) peut être intégré dans ledit dossier (3), et un état déplié, dans lequel ledit module de siège d'enfant (2) produit un siège d'enfant tourné vers l'arrière,
ledit module de siège d'enfant (2) comprenant
- une assise (13) et dossier de siège (15) pour recevoir un enfant devant être assis dans le module de siège d'enfant (2), et
- une structure de support (17) pouvant être fixée audit dossier (3) dudit siège de passager (5),
ladite assise (13) et ledit dossier de siège (15) dudit module de siège d'enfant (2) étant connectés de manière pivotante à ladite structure de support (17), autorisant ainsi le mouvement dudit module de siège d'enfant (2) entre ledit état plié et ledit état déplié,
**caractérisé en ce que**
ladite structure de support (17) comprend une première portion (19), une deuxième portion (21), et une troisième portion (23),
ladite première portion (19) pouvant, à une première extrémité (25), être fixée de manière pivotante audit dossier (3) dudit siège de passager (5) dans ledit véhicule (7),
une deuxième extrémité opposée (27) de ladite première portion (19) étant connectée de manière pivotante à une première extrémité (29) de ladite deuxième portion (21),
une deuxième extrémité opposée (31) de ladite deuxième portion (21) étant connectée de manière pivotante à une première extrémité (33) de ladite troisième portion (23),
une deuxième extrémité opposée (35) de ladite troisième portion (23) étant connectée de manière pivotante audit dossier de siège (15),
ledit dossier de siège (15) étant en outre connecté à ladite première portion (19) au moins dans ledit état déplié dudit module de siège d'enfant (2).

2. Agencement de siège de véhicule (1) selon la revendication 1, dans lequel ledit module de siège d'enfant (2) forme, dans son état plié, au moins une portion de la surface de réception de passager (59) dudit dossier (3).

3. Agencement de siège de véhicule (1) selon l'une quelconque des revendications 1 et 2, dans lequel ledit module de siège d'enfant (2) est complètement intégré dans ledit dossier (3) dudit siège de passager (5) dans ledit état plié.

4. Agencement de siège de véhicule (1) selon l'une quelconque des revendications 1 à 3, ledit siège de passager (5) étant un siège arrière central.

5. Agencement de siège de véhicule (1) selon l'une quelconque des revendications précédentes, dans lequel ledit module de siège d'enfant (2) comprend en outre au moins une structure de fixation (11a, 11b), ladite première portion (19) pouvant, à ladite première extrémité (25), être fixée de manière pivotante audit dossier (3) dudit siège de passager (5) au moyen de ladite au moins une structure de fixation (11a, 11b), de préférence au moyen d'une paire de structures de fixation (11a, 11b), une sur chaque côté latéral de ladite première portion (19) de ladite structure de support (17).

6. Agencement de siège de véhicule (1) selon l'une quelconque des revendications précédentes, dans lequel ledit dossier de siège (15) dudit module de siège d'enfant (2) est connecté de manière coulissante à ladite première portion (19) de ladite structure de support (17), de telle sorte que ledit dossier de siège (15) puisse coulisser par rapport à ladite première portion (19) lors du transfert dudit module de siège d'enfant (2) de son état plié à son état déplié, par exemple par le fait que ledit dossier de siège (15) comprend une saillie (37) adaptée pour coulisser dans une fente (41) de ladite première portion (19).

7. Agencement de siège de véhicule (1) selon l'une quelconque des revendications précédentes, dans lequel ladite deuxième portion (21) de ladite structure de support (17) comprend une portion de connexion (45) pour la fixation libérable à un corps dudit véhicule (7), de préférence à une console centrale (47).

8. Agencement de siège de véhicule (1) selon l'une quelconque des revendications précédentes, dans lequel ladite assise (13) dudit module de siège d'enfant (2) forme une partie de la surface de réception de passager (59) dudit dossier (3) dudit siège de passager (5).

9. Agencement de siège de véhicule (1) selon l'une quelconque des revendications précédentes, dans lequel ladite assise (13) est connectée de manière pivotante à ladite première portion (19) de ladite structure de support (17).

10. Agencement de siège de véhicule (1) selon la revendication 9, dans lequel ladite assise (13) peut être pivotée d'une première position lorsque ledit module de siège d'enfant (2) est dans sa position pliée à une deuxième position appropriée pour recevoir un enfant, l'espace dans lequel l'assise (13) était dans sa première position formant ainsi une ouverture (57) appropriée pour recevoir les pieds d'un enfant assis dans ledit module de siège d'enfant (2).

11. Agencement de siège de véhicule (1) selon l'une quelconque des revendications précédentes, dans lequel ledit dossier de siège (15) et/ou ladite assise (13) dudit module de siège d'enfant (2) comprend/comprennent en outre au moins une structure latérale (49a, 49b, 51a, 51b) sur un côté latéral dudit dossier de siège (15) et/ou de ladite assise (13), ladite structure latérale (49a, 49b, 51a, 51b) étant connectée de manière pivotante audit dossier de siège (15) et/ou à ladite assise (13), de telle sorte que ladite structure latérale (49a, 49b, 51a, 51b) puisse tourner entre une position pliée et une position déployée.

12. Agencement de siège de véhicule (1) selon l'une quelconque des revendications précédentes, ledit siège de passager (5) comprenant en outre un appui-tête (43), ledit appui-tête (43) étant façonné de telle sorte qu'une cavité pour recevoir une portion dudit module de siège d'enfant (2) dans son état plié soit prévue en dessous dudit appui-tête (43).

13. Agencement de siège de véhicule (1) selon la revendication 12, dans lequel ledit appui-tête (43) peut être relevé par rapport audit dossier (3) dudit siège de passager (5) afin de permettre le déplacement dudit module de siège d'enfant (2) entre son état plié et son état déplié.
